Europäisches Patentamt

European Patent Office

Office européen des brevets

(11) Numéro de publication: **0 251 924**
**A1**

## (12) DEMANDE DE BREVET EUROPEEN

(21) Numéro de dépôt: **87401504.3**

(22) Date de dépôt: **30.06.87**

(51) Int. Cl.⁴: **H 04 Q 1/24**

(30) Priorité: **04.07.86 FR 8609762**

(43) Date de publication de la demande:
**07.01.88 Bulletin 88/01**

(84) Etats contractants désignés: **DE GB**

(71) Demandeur: **THOMSON VIDEO EQUIPEMENT**
**17, rue du Petit Albi**
**F-95800 Cergy Saint Christophe (FR)**

(72) Inventeur: **Surjon, Claude**
**THOMSON-CSF SCPI 19, avenue de Messine**
**F-75008 Paris (FR)**

(74) Mandataire: **Courtellemont, Alain et al**
**THOMSON-CSF SCPI 19, avenue de Messine**
**F-75008 Paris (FR)**

(54) Dispositif de test d'une grille de commutation, et grille comportant un tel dispositif.

(57) Dispositif de test pour détecter un défaut dans une grille de commutation pendant qu'elle est "en service" c'est-à-dire pendant que des signaux, autres que ceux de test, doivent être acheminés.

A une grille de commutation (1) comportant N entrées (E1 à EN) et P sorties (S1 à SP) sont associées deux barres de commutation (2,3) comportant respectivement N entrées couplées aux N entrées de la grille et P entrées couplées aux P sorties de la grille. Un circuit de comparaison (4,5,6) est relié aux sorties des barres. Ce circuit fournit un signal de panne si, lors du test d'une connexion donnée établie par la grille, un déséquilibre se produit entre les signaux qu'il reçoit sur ses deux entrées, c'est-à-dire si la connexion donnée qui aurait dû être établie grâce au circuit de commande (8) de la grille, est défectueuse.

Application à toutes les grilles de commutation quels que soient les signaux à transmettre.

**Description**

Dispositif de test d'une grille de commutation et grille comportant un tel dispositif

La présente invention se rapporte au domaine des grilles de commutation et plus particulièrement aux tests permettant de détecter une liaison défectueuse dans grille de commutation. Les grilles de commutation sont de plus en plus utilisées ; ce sont des dispositifs à N entrées et P sorties, permettant d'affecter, à l'une quelconque des P sorties, un et un seul des signaux présents sur les N entrées. Ces grilles sont utilisées en particulier en télévision, dans les centres d'émission.

Il est connu de tester une grille de commutation en appliquant sur ses entrées des signaux de test, à l'exclusion de tous autres signaux, et en vérifiant sur ses sorties si les différentes liaisons sont correctement établies. Un tel test a l'inconvénient de ne pouvoir être effecté lorsque la grille est en service, c'est-à-dire lorsque des signaux, autres que ceux de test, doivent être acheminés ; ainsi il n'est pas possible de détecter immédiatement un défaut se produisant "en service" : il faut arrêter le fonctionnement "en service" pour effectuer le test et détecter le défaut.

Il est également connu, lorsque les signaux à transmettre par la grille comportent, en des endroits précis, des zones dépourvues d'information (signaux vidéo de télévision par exemple), d'introduire dans ces zones un signal de test et de vérifier, "en service", que le signal de test relatif à une entrée est reçu sur la sortie de grille avec laquelle cette entrée doit être relée par la grille. Cette façon d'effctuer les tests présente l'avantage de ne pas nécessiter l'arrêt du fonctionnement "en service" de la grille ; elle présente par contre divers inconvénients

-elle n'est applicable que lorsque la grille est destinée à acheminer des signaux comportant, en des endroits précis, des zones dépourvues d'information,

-elle nécessite, sur les entrées de la grille, des circuits d'introduction de signaux de test et, sur les sorties de la grille, des circuits d'effacement de signaux de test ; ceci conduit à un dispositif de test coûteux.

La présente invention a pour but d'éviter ou pour le moins de réduire les inconvénients indiqués ci-avant et, en particulier, de permettre la détection d'un défaut tout en maintenant le fonctionnement "en service" de la grille, du moins jusqu'à et y comprise la détection du défaut, cette détection ayant lieu dès qu'il est fait appel à liaison comportant le défaut.

Ceci est obtenu en comparant les signaux d'entrée et de sortie de la grille.

Selon l'invention un dispositif de test d'une grille de commutation à N entrées et P sortie (N et P entiers positifs avec au moins N supérieur à 1), est caractérisé en ce que, pour permettre d'effectuer un test alors que la grille est en service,il comporte : une première barre de commutation à une sortie de test et N entrées respectivement couplées aux N entrées de la grille, une seconde barre de commutation à une sortie de test et P entrées respectivement couplées aux P sorties de la grille, un circuit de commande pour, en fonction d'une connexion donnée parmi les connexions effectuées à un moment donné par la grille, sélectionner l'entrée de la première barre qui est couplée à l'entrée de grille correspondant à la connexion donnée et l'entrée de la seconde barre qui est couplée à la sortie de grille correspondant à la connexion donnée, et un circuit de comparaison ayant deux entrées reliées respectivement aux deux sorties de test des deux barres et une sortie couplée au circuit de commande pour délivrer un signal de panne.

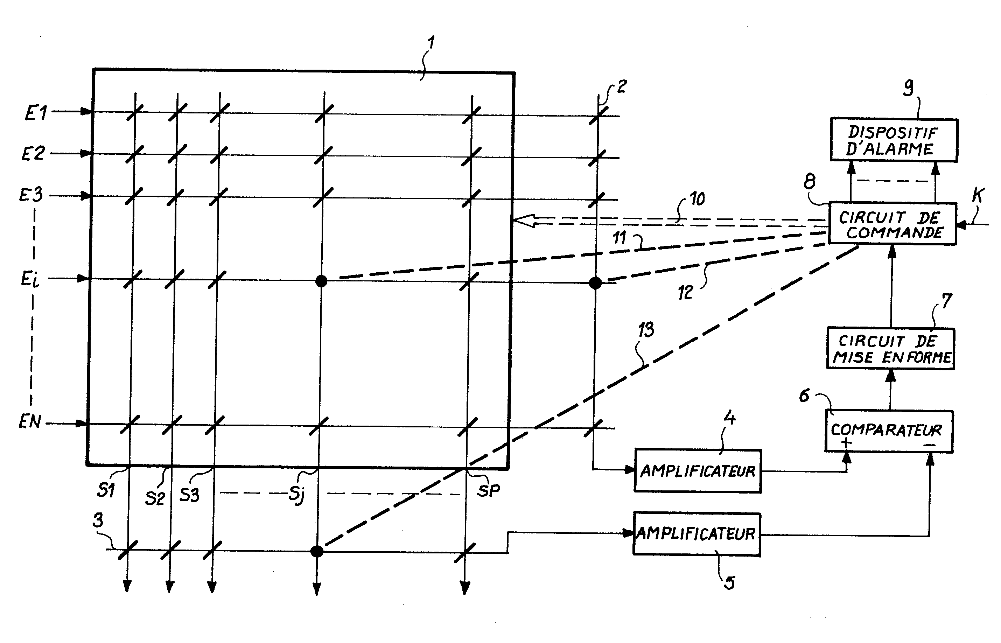

La présente invention sera mieux comprise et d'autres caractéristiques apparaîtront à l'aide de la description ci-après et de la figure s'y rapportant qui représente une grille de commutation avec son dispositif de test.

La figure représente une grille de commutation, 1, aussi appelée matrice de commutation, comportant N entrées E1 à EN et P sorties S1 à SP. Dans l'exemple décrit N = 10 et P = 10.

Cette grille de commutation est un dispositif permettant d'affecter, à l'une quelconque des P sorties, un et un seul des signaux présents sur les N entrées. Dans ce qui suit il apparaît également des barres de commutation à plusieurs entrées et une seule sortie ; ces barres peuvent être définies comme des grilles de commutation à une seule sortie ou comme des dispositifs à une seule sortie, permettant d'affecter, à cette sortie, l'un quelconque des signaux présents sur ses entrées. Il est à remarquer qu'une grille de commutation à N entrées et P sorties peut être considérée comme la juxtaposition de P barres à N entrées.

Pour permettre la détection quasi immédiate des défaillances d'une liaison entre une entrée et une sortie de la grille 1, deux barres de commutation, 2, 3, sont utilisées. La barre 2 forme ce qui peut être appelé la barre d'entrée du dispositif de test ; elle comporte N entrées qui sont respectivement reliées aux N entrées E1 à EN de la grille. L'autre barre, 3, forme la barre de sortie du dispositif ; elle comporte P entrées qui sont respectivement reliées aux P sorties S1 à SP.

Les sorties des barres 2 et 3 sont respectivement reliées aux entrées de deux amplificateurs ajustables 4 et 5, eux-mêmes reliés aux entrées + et - d'un comparateur d'amplitude 6. Le signal de sortie du comparateur 6, après mise en forme dans un circuit de mise en forme 7, est délivré à un circuit de commande 8. Le circuit de commande 8 est conçu pour sélectionner, sous le contrôle des signaux K d'un terminal non représenté, celles des entrées E1 à EN et cells des sorties S1 à SP qui doivent être électriquement reliées par la grille 1. De plus le circuit de commande 8 est conçu pour interroger systématiquement le dispositif de test en vérifiant l'état de toute nouvelle commutation dès son établissement et en vérifiant, ensuite, successivement et cycliquement l'état de l'ensemble des connexions établies par la grille. Pour interroger, à un moment donné, le système de test sur l'état d'une connexion donnée, le circuit de commande 8 sélectionne l'entrée de la barre 2 reliée à celle des entrées E1 à EN correspondant à la connexion donnée et l'entrée de la barre 3 reliée à celle des sorties S1 à SP correspondant à la connexion donnée; les liasons relatives à l'établissement de cette connexion donnée et à la sélection des entrées des barres 2 et 3 correspondantes ont été schématisées par trois traits forts interrompus, 11, 12, 13, entre le circuit de commande et les points de connexion à établir (liaison 12, 13) ou déjà établis (liaison 11).

Ainsi à chaque fois qu'il doit interroger une connexion donnée qui affecte une entrée Ei (Ei entrée quelconque de la grille 1) à une sortie Sj (Sj sortie quelconque de la grille 1), le circuit de commande 8 sélectionne l'entrée de la barre 2 et l'entrée de la barre 3 correspondant respectivement à Ei et Sj. L'ensemble de comparaison constitué par les amplificateurs 4 et 5 et le comparateur 6, reçoit le même signal sur les entrées + et - du comparateur 6 si la liaison Ei vers Sj est correctement établie ; le comparateur délivre, dans ce cas, un signal nul au circuit de mise en forme 7. Par contre, dans le cas où la liaison ne se fait pas ou est mal établie, le comparateur 6 ne recevant pas le même signal sur ses deux entrées, délivre un signal de panne, non nul, qui, après mise en forme, est fourni au circuit de commande 8 ; le circuit de commande 8, qui sélectionne Ei et Sj, envoie les deux signaux de sélection correspondants ainsi que le signal de panne à un dispositif d'alarme, 9, constitué par un circuit de décodage d'entrée suivi d'un circuit d'affichage pour donner, par affichage lumineux sur un écran, les références relatives à la liaison défectueuse.

Il est à noter que le circuit de commande 8 est un circuit de commande de grille dans lequel les signaux de sortie, au lieu d'être appliqués seulement à la grille 1, sont également appliqués au dispositif d'alarme 9 et sont appliqués, pour les signaux de sélection d'entrées, sur la barre 2 et, pour les signaux de sélection de sortie, sur la barre 3. En ce qui concerne le signal de panne fourni par les circuit de mise en forme 7, le circuit de commande 8 se contente de le transmettre au dispositif d'alarme 9.

Si la grille 1 avait été du type à trajets multiples interchangeables, ce qui n'est habituellement le cas que pour des grilles de grande capacité (au moins cent entrées et cent sorties), le signal de panne aurait pu être utilisé pour rétablir une liaison correcte entre une entrée et une sortie en déclenchant une modification du trajet, à l'intérieur de la grille, entre l'entrée et la sortie considérées ; une flèche en traits interrompus, 10, allant du circuit de commande 8 à la grille 1, figure les connexions qui devraient alors être établies entre le circuit 8 et la grille pour permettre de modifier les trajets à l'intérieur de la grille de commutation, en fonction du signal de panne.

La présente invention n'est pas limitée à l'exemple décrit et à sa variante évoquée dans le paragraphe précédent. Elle s'applique, en particulier, au cas d'une grille n'ayant qu'une seule sortie et au moins deux entrées ; dans ce cas la barre 3 de la figure est une barre fictive à une entrée et une sortie constituée par une simple connexion entre la sortie unique de la grille et l'amplificateur 5. Elle s'applique également au cas ou le test d'une connexion se fait uniquement au moment de l'établissement de cette connexion et au cas où le test des connexions réalisées par la grille ne se fait que cycliquement, l'établissement d'une nouvelle connexion donnant lieu simplement à l'introduction du test de cette nouvelle connexion dans le cycle, à un endroit qui peut, par exemple, être déterminé par la position du point de connexion dans la grille.

## Revendications

1. Dispositif de test d'une grille de commutation à N entrées et P sorties (N et P entiers positifs avec au moins N supérieur à 1), caractérisé en ce que, pour permettre d'effectuer un test alors que la grille est en service, il comporte : une première barre de commutation (2) à une sortie de test et N entrées respectivement couplées aux N entrées de la grille (1), une seconde barre de commutation (3) à une sortie de test et P entrées respectivement couplées aux P sorties de la grille (1), un circuit de commande (8) pour, en fonction d'une connexion donnée parmi les connexions effectées à un moment donné par la grille, sélectionner l'entrée de la première barre qui est couplée à l'entrée de grille correspondant à la connexion donnée et l'entrée de la seconde barre qui est couplée à la sortie de grille correspondant à la connexion donée, et un circuit de comparaison (4, 5, 6) ayant deux entrées reliées respectivement aux deux sorties de test des deux barres et une sortie couplée au circuit de commande pour délivrer un signal de panne.

2. Dispositif de test selon la revendication 1, caractérisé en ce qu'il comporte un dispositif d'alarme (9) couplé au circuit de comparaison (4,5,6).

3. Dispositif de test selon la revendication 1, caractérisé en ce que la grille étant du type à trajets multiples interchangeables, il comporte des connexions de commande de trajet (10), entre le circuit de commande (8) et la grille (1), pour modifier, dans la grille, le trajet entre l'entrée et la sortie sélectionées lorsque le signal de panne indique que ce trajet est défaillant.

4. Grille de commutation, caractérisée en ce qu'elle comporte un dispositif de test selon l'une quelconques des revendications précédentes.

0251924

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DE-A-2 523 912 (LICENTIA)<br>* Page 3, ligne 24 - page 4, ligne 26; page 5, lignes 21-29; page 6, lignes 11-13; figure 1 * | 1,4 | H 04 Q 1/24 |
| Y | | 2,3 | |
| | --- | | |
| Y | US-A-3 825 701 (JACOBS)<br>* Abrégé * | 2,3 | |
| | ----- | | |

DOMAINES TECHNIQUES RECHERCHES (Int. Cl.4)

H 04 Q

Le présent rapport de recherche a été établi pour toutes les revendications

| Lieu de la recherche | Date d'achèvement de la recherche | Examinateur |
|---|---|---|
| LA HAYE | 29-09-1987 | SNELL T. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82